# EUROPEAN PATENT SPECIFICATION

(11) **EP 4 158 880 B1**
(45) Date of publication and mention of the grant of the patent: **16.09.2026**
(21) Application number: 21730254.6
(22) Date of filing: 26.05.2021
(51) Int. Cl.: H04L 67/12, G06F 30/20, E21C 41/16, G06F 30/13

(54) **METHOD, SYSTEM, AND COMPUTER PROGRAM PRODUCT FOR A REAL-TIME ESTIMATION OF RISK IN AN EXCAVATION**
VERFAHREN, SYSTEM UND COMPUTERPROGRAMMPRODUKT ZUR ECHTZEITSCHÄTZUNG DES RISIKOS IN EINER AUSGRABUNG
PROCÉDÉ, SYSTÈME ET PRODUIT-PROGRAMME D'ORDINATEUR POUR UNE ESTIMATION DE RISQUE EN TEMPS RÉEL DANS UNE EXCAVATION

(30) Priority: 26.05.2020 FI 20205537
(43) Date of publication of application: 05.04.2023
(73) Proprietor: Aalto University Foundation SR, 00076 Aalto (FI)
(72) Inventor: UOTINEN, Lauri, 02660 Espoo (FI); JANISZEWSKI, Mateusz, 00760 Aalto (FI); MISHRA, Ritesh, 00760 Aalto (FI)
(74) Representative: Berggren Oy
(86) International application number: PCT/FI2021/050376
(87) International publication number: WO 2021/240062

(56) References cited:
- CN-A- 107 067 333
- US-A1- 2017 091 355
- MARTIN C D ET AL: "Stress, instability and design of underground excavations", INTERNATIONAL JOURNAL OF ROCK MECHANICS AND MINING SCIENCES, PERGAMON, UNITED KINGDOM, vol. 40, no. 7, 2 September 2003 (2003-09-02), pages 1027 - 1047, XP085040125, ISSN: 1365-1609, DOI: 10.1016/S1365-1609(03)00110-2

## Description

### FIELD OF THE INVENTION

The present invention relates in general to monitoring of a stress state in excavations. In particular, however not exclusively, the present invention concerns real-time estimation of risk in an excavation.

### BACKGROUND

Typically, during the underground mining operations, the mine operator does not know the actual stress state in most of the parts of their mine. Without knowing the stress levels around important tunnels, it is not possible to mine all ore available. Additionally, excessive stress level may threaten production and lead to collapses. In known mines, the operator does not know if the mining environment is safe for the mining equipment and the personnel.

It is known to utilize Stability Graph Method in mines to estimate stope stability. It is crude and has unknown efficiency and factor of safety. Furthermore, it works with constant variables and assumes deterministic approach. Also Fault or Event tree analysis are used in estimation of risks in the mines, however, these are not capable of adapting to new data.

Document Martin C D et al: "Stress, instability and design of underground excavations", International Journal of Rock Mechanics and Mining Sciences, Pergamon, United Kingdom, vol. 40, no. 7-8, September 2003 (2003-09-02), pages 1027-1047, XP085040125, ISSN: 1365-1609, DOI: 10.1016/S1365-1609(03)00110-2, presents preliminary guidelines for designers involved in underground opening projects. It is noted that, because in situ stress drives failure processes, the most common way of utilizing stress data in design is to determine the stress level as a ratio of the in situ stress state to the strength of the rock mass, or visa versa. This ratio is frequently used as an index to assess the risk of over stressing the rock mass for the design of underground openings.

### SUMMARY

An objective of the present invention is to provide a method, a system, and a computer program product for a real-time estimation of risk in an excavation. Another objective of the present invention is that the method, the system, and the computer program product at least alleviate some of the drawbacks in the known solutions.

The objectives of the invention are reached by a method, a system, and a computer program product as defined by the respective independent claims.

According to a first aspect, a method for a real-time estimation of risk in an excavation, such as in a mine or a tunnel, is provided. The method comprises
- receiving, from a plurality of strain measurement devices in an excavation, strain data including data related to a plurality of strain components having different directions at a computing system, and
- estimating the risk by executing a probabilistic statistical model, such as a Bayesian network, in the computing system, wherein the received strain data is utilized in the probabilistic statistical model for the estimation.

Furthermore, the method may comprise determining a displacement in a direction, or a plurality of displacements in various directions, and calculating a strain or strains, respectively, based on the determined displacement(s). Optionally, the calculated strain(s) may then be utilized to produce the strain data.

In various embodiments, the Bayesian network may be configured to estimate geotechnical risk in real-time and thus utilized in real-time management of the risk. Furthermore, the model, such as the Bayesian network, may preferably include self-correction when the amount of strain data and, optionally, other inputs, increases.

In various embodiments, wherein the strain data may be determined during subsequent excavation stages, the method may comprise accumulating the strain data in the computing system over the subsequent excavation stages. Furthermore, the method may comprise determining the initial stress state or level based on a plurality of stress states or levels determined during the excavation stages.

In various embodiments, the probabilistic statistical model includes a plurality of precalculated unit solutions.

In preferable embodiments, the probabilistic statistical model, such as the Bayesian network, may be configured to utilize probability distribution related to an event, such as increasing the risk in the excavation, for estimating the probability of the event. The distribution may be characterized, for example, by its mean or expectation, and deviation.

In preferable embodiments, the probabilistic statistical model, such as the Bayesian network, may be configured to be, optionally selectively, bidirectional, such as estimating the risk or the probability of an event based on the input, and/or estimating the probability of a cause for the event which has already occurred.

Furthermore, the strain measurement devices may be arranged surrounding a stope or an excavation to determine the strain data along different directions with respect to each other. For example, in case of determining stress in a plane, strain data may be determined in at least three different directions, however, any two of the directions not in opposite directions (having angle of 180 degrees therebetween). In case of determining stress in three dimensions, strain data may be determined in at least six different directions.

In various embodiments, the method may comprise back-calculating, by the computing system, a stress change based on the received strain data. Furthermore, the back-calculating may include the use of superposition to calculate the strain change based on the strain components included the determined strain data. Optionally, the strain components may be determined based on unit loads and corresponding loading factors.

Alternatively or in addition, the back-calculating may comprise utilizing multiple linear regression, wherein a dependent variable of the multiple linear regression is the determined strain and explanatory variables of the multiple linear regression are the stress tensor components or loading factors.

In various embodiments, the strain measurement devices may be borehole extensometers.

In addition, the method may comprise receiving inputs related to characteristics of the excavation, and utilizing the inputs in the estimation. The inputs may be received through a user interface used by an operator or via a communication connection from another computing system. The inputs may, for example, relate to the effect of adding artificial supports to the excavation, thereby affecting the estimated risk.

According to a second aspect, a system for a real-time estimation of risk in an excavation, such as in a mine or a tunnel, is provided. The system comprises a plurality of strain measurement devices in an excavation arranged to determine strain data including data related to a plurality of strain components having different directions, and a computing system in connection with the plurality of strain measurement devices and configured to receive, from a plurality of strain measurement devices in an excavation, strain data including data related to a plurality of strain components having different directions at a computing system, and to estimate the risk by executing a probabilistic statistical model, such as a Bayesian network, in the computing system, wherein the received strain data is utilized in the probabilistic statistical model for the estimation.

According to a third aspect, a computer program product for a real-time estimation of risk in an excavation, such as in a mine or a tunnel, is provided. The product comprising program instructions which when executed by a computing system cause the system to perform the method according to the first aspect.

The present invention provides a method, a system, and a computer program product for a real-time estimation of risk in an excavation. The present invention provides advantages over known solutions in that it facilitates the real-time risk estimation and decision-making influencing the stope layout, size and length, as well as, pillar size, drilling and charging patterns for individual stopes, thereby allowing more ore to be obtained by mining and reducing collapses and ore dilution by partial collapses. Further advantage is that the risk may be estimated already with a small amount of data and the estimation becomes more accurate as the amount of data increases. Still further, the present invention can provide information about the reliability of the data and the outcome, and the validity of the assumptions used in the model.

Various other advantages will become clear to a skilled person based on the following detailed description.

The expression "a number of" may herein refer to any positive integer starting from one (1).

The expression "a plurality of" may refer to any positive integer starting from two (2), respectively.

The terms "first", "second" and "third" are herein used to distinguish one element from other element, and not to specially prioritize or order them, if not otherwise explicitly stated.

The exemplary embodiments of the present invention presented herein are not to be interpreted to pose limitations to the applicability of the appended claims. The verb "to comprise" is used herein as an open limitation that does not exclude the existence of also unrecited features. The features recited in depending claims are mutually freely combinable unless otherwise explicitly stated.

The novel features which are considered as characteristic of the present invention are set forth in particular in the appended claims. The present invention itself, however, both as to its construction and its method of operation, together with additional objectives and advantages thereof, will be best understood from the following description of specific embodiments when read in connection with the accompanying drawings.

### BRIEF DESCRIPTION OF FIGURES

Some embodiments of the invention are illustrated by way of example, and not by way of limitation, in the figures of the accompanying drawings.
Figure 1 illustrates schematically an excavation according to an embodiment of the present invention.
Figure 2 illustrates schematically a system according to an embodiment of the present invention.
Figures 3A and 3B illustrate schematically a system according to an embodiment of the present invention.
Figure 4 shows a flow diagram of a method in accordance with an embodiment of the present invention.
Figure 5 illustrates schematically a system according to an embodiment of the present invention.

### DETAILED DESCRIPTION OF SOME EMBODIMENTS

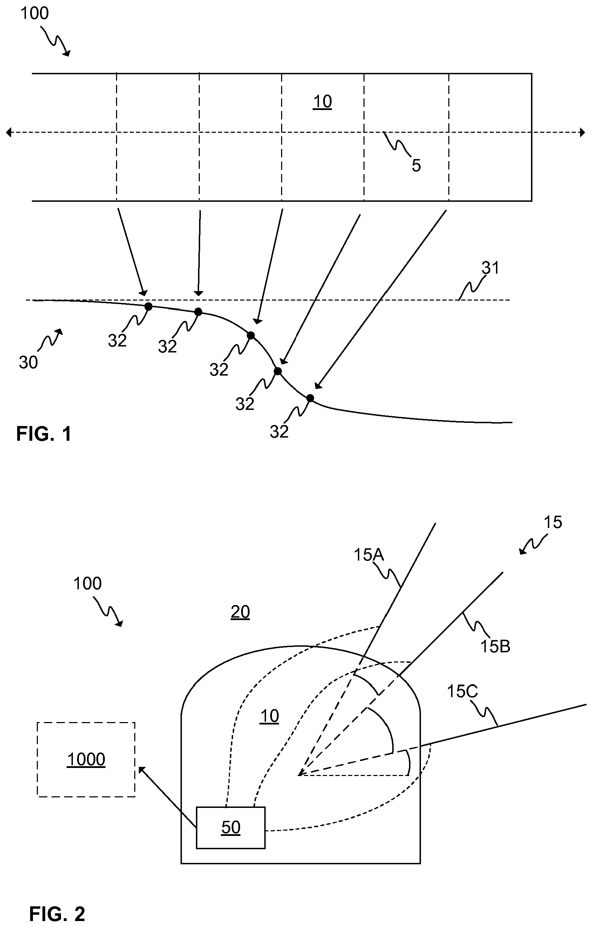

Figure 1 illustrates schematically an excavation 100 according to an embodiment of the present invention. The dashed lines perpendicular with respect to the longitudinal direction 5 of the excavation 100 illustrate the progress of the excavation activities, such as mining, in the stope 10 of the excavation 100. At 30 is shown a stress state or level of the excavation 100 in accordance with the progress. A plurality of stress states or levels 32 are determined during subsequent excavation stages. The initial stress state or level 31 is shown as a horizontal dashed line. in Fig. 1.

Regarding the initial, or virgin or *in situ,* stress state or level 31, the *in situ* stress depends mostly on the kind of loading which the rock mass is subjected to. The most important loads are tectonic processes and loading by the weight of overlying strata. There are many other loads which may be influencing the stress in rock mass as for example heat, liquid or gas pressure or presence of weakening zone within the rock.

Figure 2 illustrates schematically a system according to an embodiment of the present invention. The system may comprise strain measurement devices 15A-15C, or a set 15 of such devices 15A-15C, for example, at least three for the two-dimensional case or at least six for the three-dimensional case, arranged into the excavation 100, preferably into the surroundings 20 of the stope 10. The strain measurement devices 15A-15C may be arranged to determine the strain data along different directions with respect to each other such as shown in Fig. 2. Furthermore, the system may comprise a computing system 1000 configured to run a probabilistic statistical model, such as a Bayesian network, for estimating risk in the excavation based on at least the strain data and, optionally, other characteristics of the excavation, such as the effect of artificial supports, the stope layout, size and length, as well as, pillar size, drilling and charging patterns for individual stopes. Thus, the computing system 1000 may be configured to receive the strain data.

In various embodiments, the strain measurement devices 15, 15A-15C may be strain gauges, extensometers, such as borehole extensometers, linear variable differential transformers (LVDTs), rebar rock bolts instrumented with strain gauges, inclinometers, or an array of convergence measurement points.

In preferable embodiments, the probabilistic statistical model, such as the Bayesian network, may be configured to utilize probability distribution related to an event, such as causing risk in the excavation, for estimating the probability of the event. The distribution may be characterized, for example, by its mean or expectation, and deviation.

For example, the probabilistic statistical model may take a measurement as input and assume it to be from an unknown distribution. The model may be configured to adapt when the input data accumulates. This means that the model gets more information about the distribution of its inputs, such as measurements. The accumulating data may be utilized to make the estimation of risk more accurate.

Thus, the model may be configured to detect if an input is characterized by a plurality, such as two, different distributions, for example, due to two different rock types. The detection may preferably be based on accumulated data in the model.

In preferable embodiments, the probabilistic statistical model, such as the Bayesian network, may be configured to be, optionally selectively, bidirectional, such as estimating the risk or the probability of an event based on the input, and/or estimating the probability of a cause for the event which has already occurred.

In various embodiments, the Bayesian network may be configured to be initiated with a prior probability which is the assumed probability that an event happens, such as roof deformation, seismic event, stope collapse etc. given the underlying parameters, or evidence, such as feedback from extensometer, vibration monitoring. These prior probabilities are then updated using actual events of stope collapse, roof deformation, seismic events and studying the underlying parameters, or evidence. This measurement can be updated in real time from instrumentation to increase the accuracy of the prior probabilities. Advantage of the Bayesian network is that it provides feedback immediately and thus reduces the risk of missing important feedback. This can prevent overly conservative designs which create economic loss of resources and increases operational cost.

In some embodiments, the probabilistic statistical model, such as the Bayesian network, may be configured to include inputs, such as initial and/or subsequently added on-demand, which may include, for example, expert judgment in form of probabilities of certain events in the model. For example, in the Bayesian network, the incorporation of expert judgment through prior probabilities can be started even before vast amount of data about the risk event is collected. In some embodiments, the Bayesian inference and parametric learning in Bayesian network may be utilized to improve the accuracy of the model over time as more and more data is collected.

The computing system 1000 may reside, at least partly, inside the excavation 100 or reside completely outside thereof, and having a communication connection to receive the strain data and/or information about the stress changes, for estimating geotechnical risk in real-time, and thus, optionally, be utilized in real-time management of the risk.

Furthermore, the system may comprise a processing unit 50, such as a computer or computing device, arranged to receive the determined strain data. The processing unit 50 may be comprised in the computing system 1000 or be a separate unit in connection with the computing system 1000. In various embodiments, the processing unit 50, or the computing system 1000, may be configured to back-calculate a stress change based on the received strain data. Thus, the processing unit 50 and/or the computing system 1000 is preferably at least in communication connection with the strain measurement devices 15A-15C.

In some embodiments, the first strain measurement device 15A has an angle of 60 degrees relative to the horizontal, the second strain measurement device 15B has an angle of 45 degrees relative to the horizontal, and the third strain measurement device 15C has an angle of 15 degrees relative to the horizontal.

In some embodiments, the strain measurement devices 15A-15C may be multipoint borehole extensometers to measure strain in multiple locations. The extensometers may be, for example, 20 meters long and installed to angles of 20, 50, and 70 degrees measured from horizontal. The extensometers may include six anchor points placed in every 3.33 meters. This kind of an extensometer can provide five data points as each strain data is between two anchor points.

In preferable embodiments, the strain measurement devices 15A-15C are borehole extensometers. The borehole extensometers may be at least 10 or 20 meters in length. Furthermore, the borehole extensometers may be such as they are anchored in a plurality of positions of the extensometers, and, optionally, arranged to measure strain at the plurality of positions thereof.

In some embodiments, the directions of two of the devices may be different by an angle in the range of 10 to 45 degrees, optionally, by an angle of 15 or 20 degrees.

In various embodiments, such as in Fig. 2, the strain measurement devices 15A-15C of a set 15 may be arranged such that the directions thereof intersect inside the stope 10 of the excavation 100. This thus preferably refers to imaginary lines extending from the devices 15A-15C along their directions and thereby the imaginary lines, in fact, may be arranged to intersect in the stope 10 as shown in Fig. 2 by dashed lines.

In various embodiments, the system may comprise at least six strain measurement devices. Increasing the number of strain measurement devices reduces the effect of noise of the measurements.

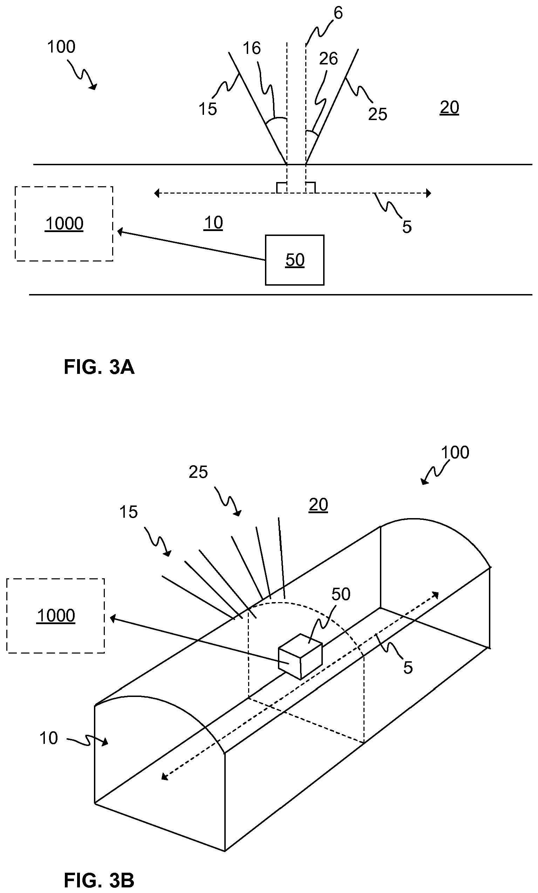

Figures 3A and 3B illustrate schematically a system according to an embodiment of the present invention. The system is similar to one shown in Fig. 2, however, it comprises at least six strain measurement devices arranged into two sets 15 and 25 of such devices 15A-15C. Furthermore, the at least six strain measurement devices forming the two sets 15, 25 of at least three measurement devices may be arranged in opposite directions with respect to a longitudinal direction 5 of the stope 10. This is illustrated in Fig. 3A in which the sets 15, 25 are in an angle 16, 26 with respect to a perpendicular direction 6 relative to the longitudinal direction 5. The angle differs from 0 and 180 degrees and is preferably in the range of 10-75 degrees, more preferably in the range of 10-45 degrees, and most preferably 15 degrees. This allows determining the stress changes in three dimensions.

Figure 3B further illustrates how to sets 15, 25 may be arranged into the surroundings 20 of the stope 10 in the excavation 100.

In various embodiments, the system may be configured, such as by the processing unit 50, to provide an alert if a stress threshold is exceeded. The threshold may be linked to the stress state or level is illustrated at 30 in Fig. 1.

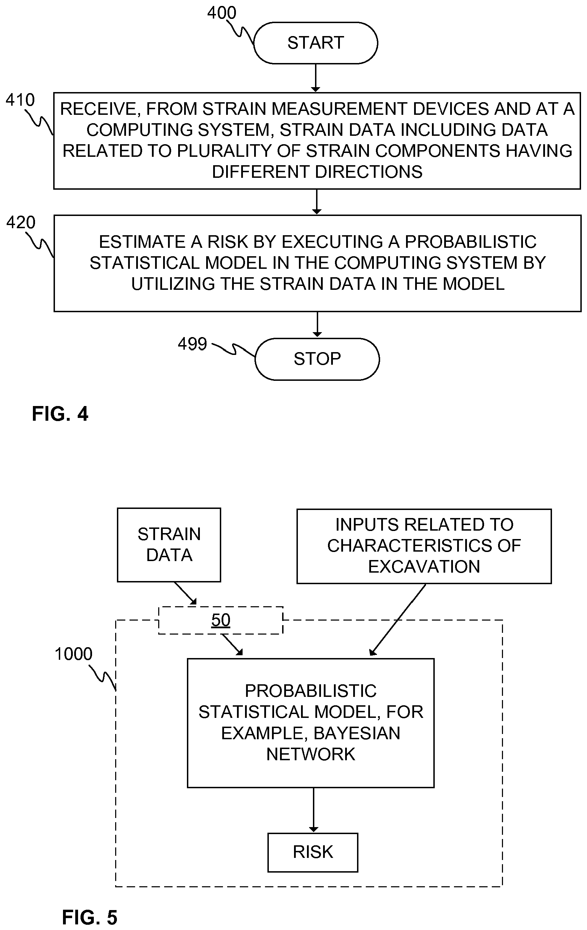

Figure 4 shows a flow diagram of a method in accordance with an embodiment of the present invention.

Step 400 refers to a start-up phase of the method. Suitable equipment and components and measurement devices are obtained, and systems assembled and configured for operation.

Step 410 refers to receiving, from a plurality of strain measurement devices in an excavation, strain data including data related to a plurality of strain components having different directions at a computing system.

Step 420 refers to estimating the risk by executing a probabilistic statistical model, such as a Bayesian network, in the computing system, wherein the received strain data is utilized in the probabilistic statistical model for the estimation.

Method execution is stopped at step 499. The method may be performed or executed continuously, intermittently, repeatedly, or on demand. For example, the processing unit 50 or the computing system 1000 may be arranged to poll the measurement devices 15; 15A-15C with a sampling of once per hour or at least once per four hours.

In various embodiments, the method may comprise determining strain data of the excavation 100 by at least three strain measurement devices 15; 15A-15C, wherein the strain measurement devices 15; 15A-15C are arranged surrounding a stope 10 of the excavation 100 to determine the strain data along different directions with respect to each other.

In various embodiments, the method may comprise receiving the determined strain data on a processing unit 50 arranged in connection with the strain measurement devices 15; 15A-15C.

In various embodiments, the method may comprise back-calculating, by the processing unit 50, a stress change based on the received strain data.

In various embodiments, the back-calculating may include the use of superposition to calculate the strain change based on strain components included the determined strain data. Optionally, the strain components may be determined based on unit loads and corresponding loading factors.

Alternatively or in addition, the back-calculating may comprise utilizing multiple linear regression, wherein a dependent variable of the multiple linear regression is the determined strain and explanatory variables of the multiple linear regression are the stress tensor components or loading factors.

In various embodiments, variables to be solved are at least two principal stresses (e.g. σ₁ and σ₂) and a first direction (e.g. α), such as related to an angle of or between the two principal stresses.

Alternatively or in addition, variables to be solved may be three principal stresses (e.g. σ₁*,* σ₂ and σ₃) and a first and a second direction (e.g. α and β), and, preferably, in a third direction γ, such as related to angles of or between the principal stresses. The angles may refer to pitch, yaw and roll, respectively. In an embodiment, there may be only two angles determined, and one of the stresses or stress components may be assumed to be in a vertical direction, such as parallel or opposite with respect to the direction of the gravity. The two other stresses or stress components may be assumed to lie in a horizontal plane.

In various embodiments, the method may further comprise determining the initial stress state or level 31 based on a plurality of stress states or levels 32 determined during the excavation work as shown in Fig. 1.

In various embodiments, numerical modelling methods may be used in the back-calculations for determining the strains around the excavation 100. There are several known such methods, for example, based on continuum and discontinuum methods, and combinations thereof. Examples of continuum methods are methods like Finite Element Method (FEM), Finite Difference Method (FDM) and Boundary Element Method (BEM). Examples of discontinuum methods are Discrete Element Method (DEM) with codes as UDEC and 3DEC and Discrete Fracture Network (DFN).

In various embodiments, the stress changes may be determined in two or three dimensions, for example, depending on the number and configuration, such as orientations, of the strain measurement devices 15, 25; 15A-15C.

In various embodiments, the stress state change may be back-calculated using linear regression of strain change observations, the elastic constitutive relation and the superposition principle. Thus, an assumption of continuous, homogeneous, isotropic and linearly elastic rock (CHILE) conditions may be done. In this case the loading stress tensor acting on a rock body of the excavation 100 may be divided to its components and sum up the results of strains or displacements.

Regarding the superposition of loading, the total strain of selected sections within the medium may be calculated by simple summing up the components. In plane stress, the total strain may be calculated as Δε*ₜₒₜ* = Δε_{σ,z} + Δε_{σ,x} + Δε_{σ,xz}, where Δε*ₜₒₜ* is the total strain difference and Δε_{σ,i} is the strain component difference from correspoding loading. For each of these components the strain may be expressed as strain from unit load multiplied by a load factor. In this case the whole formula changes to Δε*ₜₒₜ* = L_{z} Δε_{σ,z,1} + Lₓ Δε_{σ,x,1} + L_{xz Δεσ,xz,1}, where Lᵢ is the loading factor for a loading component, and Δ_{εσ,i,1} the strain difference component from corresponding unit loading.

Regarding the back-calculation, with the use of measured data from the excavation 100 surroundings 20 and numerical modelling of unit load, it is possible to calculate the loading factors and, thus, the change of the stress tensor around the excavation 100. The above equation may be written as ε_{T} = ε_{I,1} L, where ε_{T} is a vector of measured bolt strain data (length N measured data, for instance), ε_{I,1} a matrix of strain components from corresponding unit loading (size 3 times N, for instance), and L a vector of loading factors for loading components (length 3, for instance).

Furthermore, by taking combinations of three lines of the whole set of equations, it is possible to find loading factor vector for each of these combinations, and as a result points in space of L_{z}, Lₓ and L_{xz} can be obtained. Then, a solution may be found with use of multiple linear regression. A dependent variable of the multiple linear regression may be the determined strain and the explanatory variables of the multiple linear regression may be the stress tensor components or loading factors.

Several linear regression estimation methods have been developed and are known to a skilled person. One of the most used method is the Least square estimation and related methods which include Ordinary least square, Generalized least square, Percentage least square, Iteratively reweighed last squares, Instrumental variables, Optimal instruments and Total least squares. Next family of methods is the Maximum likelihood estimation methods which includes also Least absolute deviation, Ridge regression and Adaptive estimation method.

With respect to the numerical modelling utilized in the back-calculation, methods such as related to the known Kirsch equations, and solution thereto, and/or Mohr's circle may be utilized.

The processing unit 50, according to various embodiments, may comprise an input for external units which may be connected to a communication interface of the unit 50. External unit may comprise wireless connection or a connection by a wired manner. The communication interface provides interface for communication with external units such as the strain measurement device 15, 25; 15A-15C and/or external systems for outputting the alert, if any. There may also be connecting to the external system, such as a laptop or a handheld device. There may also be a connection to a database of the system or an external database.

The processing unit 50 and/or the computing system 1000 may comprise one or more processors, one or more memories being volatile or non-volatile for storing portions of computer program code and any data values and possibly one or more user interface units. The mentioned elements may be communicatively coupled to each other with e.g. an internal bus.

The processor is at least configured to implement at least some method steps as described. The implementation of the method may be achieved by arranging the processor to execute at least some portion of computer program code stored in the memory causing the processor, and thus the processing unit 50 and/or the computing system 1000, and/or the system, to implement one or more method steps as described. The processor is thus arranged to access the memory and retrieve and store any information therefrom and thereto. For sake of clarity, the processor herein refers to any unit suitable for processing information and control the operation of the processing unit, among other tasks. The operations may also be implemented with a microcontroller solution with embedded software. Similarly, the memory is not limited to a certain type of memory only, but any memory type suitable for storing the described pieces of information may be applied in the context of the present invention.

Figure 5 illustrates schematically a system according to an embodiment of the present invention. The system comprises the computing system 1000 which is configured to receive, from a plurality of strain measurement devices 15, 25 in an excavation 100, strain data including data related to a plurality of strain components having different directions. The strain data may be received essentially directly or optionally via the processing unit 50. Furthermore, the computing system 1000 may be configured to receive, such as via a user interface thereof, other inputs related to the characteristics of the excavation 100, such as related to the effect of artificial and/or natural support structures for the estimation of the risk. Finally, the computing system 1000 may be configured to output the risk, for example, by as digital data to be shown on a display screen or directly to a database.

In various embodiments, the system for a real-time estimation of the risk may be configured to monitor the estimated risk and thereby suggesting, such as alerting, if the risk becomes too high, such as exceeds a risk threshold. This may occur, for example, by the effect of other input related to the characteristics of the excavation 100 or by the received, preferably real-time, strain data. The operator may then manage the risk by inputting different input related to the characteristics of the excavation 100 which corresponds to different action to be taken, such as to the stope layout, size and length, as well as, pillar size, drilling and charging patterns for individual stopes.

## Claims

1. A method for a real-time estimation of geotechnical risk in an excavation, wherein the method comprises
- receiving (410), from at least six strain measurement devices in and surrounding an excavation to determine strain data along different non-parallel directions with respect to each other or from at least six strain measurement devices (15, 25; 15A-15C) forming two sets (15, 25) of three measurement devices (15A-15C) arranged in opposite directions with respect to a longitudinal direction (5) of the excavation (100) to determine strain data, which the strain data includes data related to a plurality of strain components having different directions, at a computing system (1000) during subsequent excavation stages;
- accumulating, by the computing system, the strain data over the subsequent excavation stages;
- estimating (420), by the computing system, the geotechnical risk by executing a probabilistic statistical model including back-calculation of a change of stress tensor based on the received strain data and on use of superposition based on strain components included the determined strain data, wherein the strain components are determined based on numerically modelled unit loads and corresponding loading factors, wherein distribution related to the received strain data is utilized in the probabilistic statistical model as input for the estimation of the geotechnical risk; and
- adapting, by the computing system, the model based on the accumulated strain data.

2. The method of claim 1, comprising determining the initial stress state or level based on a plurality of stress states or levels determined during the excavation stages.

3. The method of claim 1 or 2, wherein the strain components are determined based on unit loads and corresponding loading factors.

4. The method of any one of claims 1-3, wherein the back-calculating comprises utilizing multiple linear regression, wherein a dependent variable of the multiple linear regression is the determined strain and explanatory variables of the multiple linear regression are the stress tensor components or loading factors.

5. The method of any one of claims 1-4, wherein the strain measurement devices (15, 25; 15A-15C) are borehole extensometers.

6. The method of any one of claims 1-5, comprising receiving inputs related to characteristics of the excavation, and utilizing the inputs in the estimation.

7. The method of any one of claims 1-6, comprising determining a displacement in a direction, and calculating a strain based on the determined displacement.

8. A system for a real-time estimation of geotechnical risk in an excavation, wherein the system comprises
at least six strain measurement devices (15A-15C; 15, 25) in and surrounding an excavation arranged to determine strain data along different non-parallel directions with respect to each other or at least six strain measurement devices (15, 25; 15A-15C) forming two sets (15, 25) of three measurement devices (15A-15C) arranged in opposite directions with respect to a longitudinal direction (5) of the excavation (100) to determine strain data, the strain data including data related to a plurality of strain components having different directions,
a computing system (1000) in connection with the at least six strain measurement devices (15; 25) and configured to:
- receive (410), from the at least six strain measurement devices in an excavation, strain data including data related to a plurality of strain components having different directions at a computing system during subsequent excavation stages,
- accumulate the strain data in the computing system over the subsequent excavation stages, and
- estimate (420) the geotechnical risk by executing a probabilistic statistical model in the computing system (1000), including back-calculation of a change of stress tensor based on the received strain data and on the use of superposition based on strain components included the determined strain data, wherein the strain components are determined based on numerically modelled unit loads and corresponding loading factors, wherein distribution related to the received strain data is utilized in the probabilistic statistical model as input for the estimation of the geotechnical risk, and
- adapt the model based on the accumulated strain data.

9. The system of claim 8, wherein the computing system (1000) is configured to monitor the estimated risk and to compare it to a risk threshold.

10. A computer program product for a real-time estimation of risk in an excavation, wherein the product comprises program instructions which when executed by a computing system (1000) cause the system to perform the method according to any one of the preceding claims 1-7.

## Patentansprüche

1. Verfahren zum Einschätzen des geotechnischen Risikos in einem Aushub in Echtzeit, wobei das Verfahren Folgendes umfasst
- Empfangen (410) von Daten von mindestens sechs Dehnungsmessvorrichtungen in und um einen Aushub herum, um Dehnungsdaten entlang verschiedener, zueinander nicht paralleler Richtungen zu bestimmen, oder von mindestens sechs Dehnungsmessvorrichtungen (15, 25; 15A-15C), die zwei Sätze (15, 25) aus jeweils drei Messvorrichtungen (15A-15C) bilden, die in entgegengesetzte Richtungen bezüglich einer Längsrichtung (5) des Aushubs (100) angeordnet sind, zum Bestimmen von Dehnungsdaten, wobei die Dehnungsdaten Daten bezüglich einer Vielzahl von Dehnungskomponenten mit unterschiedlichen Richtungen einschließen, in einem Rechensystem (1000) während nachfolgender Aushubphasen;
- Sammeln der Dehnungsdaten über die aufeinanderfolgenden Aushubphasen hinweg durch das Rechensystem;
- Einschätzen (420), durch das Rechensystem des geotechnischen Risikos durch Ausführung eines probabilistischen statistischen Modells, das die Rückberechnung einer Änderung des Spannungstensors basierend auf den empfangenen Dehnungsdaten einschließt und eine Superposition basierend auf den Dehnungskomponenten verwendet, die in den bestimmten Dehnungsdaten enthalten sind, wobei die Dehnungskomponenten auf der Grundlage numerisch modellierter Einheitslasten und entsprechender Belastungsfaktoren bestimmt werden, wobei die mit den empfangenen Dehnungsdaten verbundene Verteilung im probabilistischen statistischen Modell als Eingabe für das Einschätzen des geotechnischen Risikos genutzt wird; und
- Anpassen des Modells durch das Rechensystem basierend auf den gesammelten Dehnungsdaten.

2. Verfahren nach Anspruch 1, umfassend das Bestimmen des anfänglichen Spannungszustands oder -niveaus basierend auf einer Vielzahl von Spannungszuständen oder -niveaus, die während der Aushubphasen bestimmt wurden.

3. Verfahren nach Anspruch 1 oder 2, wobei die Dehnungskomponenten basierend auf Einheitslasten und entsprechenden Lastfaktoren bestimmt werden.

4. Verfahren nach einem der Ansprüche 1 bis 3, wobei die Rückberechnung das Nutzen einer multiplen linearen Regression umfasst, wobei eine abhängige Variable der multiplen linearen Regression die bestimmte Dehnung ist und die erklärenden Variablen der multiplen linearen Regression die Komponenten des Spannungstensors oder die Belastungsfaktoren sind.

5. Verfahren nach einem der Ansprüche 1 bis 4, wobei es sich bei den Dehnungsmessvorrichtungen (15, 25; 15A-15C) um Bohrlochextensometer handelt.

6. Verfahren nach einem der Ansprüche 1 bis 5, umfassend das Empfangen von Eingaben, die sich auf Eigenschaften des Aushubs beziehen, und das Nutzen dieser Eingaben bei dem Einschätzen.

7. Verfahren nach einem der Ansprüche 1 bis 6, umfassend das Bestimmen einer Verschiebung in einer Richtung und das Berechnen einer Dehnung basierend auf der bestimmten Verschiebung.

8. System zum Einschätzen des geotechnischen Risikos in einem Aushub in Echtzeit, wobei das System Folgendes umfasst
mindestens sechs Dehnungsmessvorrichtungen (15A-15C; 15, 25) in und um einen Aushub herum, die so angeordnet sind, dass sie Dehnungsdaten entlang verschiedener, zueinander nicht paralleler Richtungen bestimmen, oder mindestens sechs Dehnungsmessvorrichtungen (15, 25; 15A-15C), die zwei Sätze (15, 25) aus jeweils drei Messvorrichtungen (15A-15C) bilden, die in entgegengesetzte Richtungen bezüglich einer Längsrichtung (5) des Aushubs (100) angeordnet sind, um Dehnungsdaten zu bestimmen, wobei die Dehnungsdaten Daten bezüglich einer Vielzahl von Dehnungskomponenten mit unterschiedlichen Richtungen einschließen,
ein Rechensystem (1000), das mit mindestens sechs Dehnungsmessvorrichtungen (15; 25) verbunden ist und konfiguriert ist, um:
- während der nachfolgenden Aushubphasen Dehnungsdaten von den mindestens sechs Dehnungsmessvorrichtungen in einem Aushub zu empfangen (410), die Dehnungsdaten Daten bezüglich einer Vielzahl von Dehnungskomponenten mit unterschiedlichen Richtungen einschließen,
- die Dehnungsdaten im Rechensystem über die nachfolgenden Aushubphasen hinweg zu sammeln und
- das geotechnische Risiko einzuschätzen (420), indem im Rechensystem (1000) ein probabilistisches statistisches Modell ausgeführt wird, einschließlich der Rückberechnung einer Änderung des Spannungstensors basierend auf den empfangenen Dehnungsdaten und der Verwendung einer Superposition basierend auf Dehnungskomponenten, die in den bestimmten Dehnungsdaten enthalten sind, wobei die Dehnungskomponenten basierend auf numerisch modellierten Einheitslasten und entsprechenden Belastungsfaktoren bestimmt werden, wobei die Verteilung bezüglich der empfangenen Dehnungsdaten im probabilistischen statistischen Modell als Eingabe für die Abschätzung des geotechnischen Risikos genutzt wird, und
- das Modell basierend auf den gesammelten Dehnungsdaten anzupassen.

9. System nach Anspruch 8, wobei das Rechensystem (1000) konfiguriert ist, um das geschätzte Risiko zu überwachen und es mit einem Risikoschwellenwert zu vergleichen.

10. Computerprogrammprodukt zum Einschätzen des Risikos in einem Aushub in Echtzeit, wobei das Produkt Programmanweisungen umfasst, die, wenn sie von einem Rechensystem (1000) ausgeführt werden, das System dazu veranlassen, das Verfahren nach einem der vorstehenden Ansprüche 1 bis 7 durchzuführen.

## Revendications

1. Procédé d'estimation en temps réel du risque géotechnique dans une excavation, dans lequel le procédé comprend
- la réception (410) de données à partir d'au moins six dispositifs de mesure de déformation situés dans et autour d'une excavation, afin de déterminer des données de déformation selon différentes directions non parallèles les unes par rapport aux autres, ou à partir d'au moins six dispositifs de mesure de déformation (15, 25 ; 15A-15C) formant deux ensembles (15, 25) de trois dispositifs de mesure (15A-15C) agencés dans des directions opposées par rapport à une direction longitudinale (5) de l'excavation (100) afin de déterminer des données de déformation, lesquelles données de déformation comportent des données relatives à une pluralité de composantes de déformation ayant des directions différentes, au niveau d'un système informatique (1000) au cours de phases d'excavation ultérieures ;
- l'accumulation, par le système informatique, des données de déformation au cours des phases d'excavation ultérieures ;
- l'estimation (420), par le système informatique, du risque géotechnique en exécutant un modèle statistique probabiliste, y compris le calcul a posteriori d'une variation du tenseur de contraintes en fonction des données de déformation reçues et en recourant à la superposition en fonction des composantes de déformation incluses dans les données de déformation déterminées, dans lequel les composantes de déformation sont déterminées en fonction des charges unitaires modélisées numériquement et des facteurs de charge correspondants, dans lequel la distribution relative aux données de déformation reçues est utilisée dans le modèle statistique probabiliste comme donnée d'entrée pour l'estimation du risque géotechnique ; et
- l'adaptation, par le système informatique, du modèle en fonction des données de déformation accumulées.

2. Procédé selon la revendication 1, comprenant la détermination de l'état ou du niveau de contrainte initial en fonction d'une pluralité d'états ou de niveaux de contrainte déterminés au cours des phases d'excavation.

3. Procédé selon la revendication 1 ou 2, dans lequel les composantes de déformation sont déterminées en fonction de charges unitaires et des facteurs de charge correspondants.

4. Procédé selon l'une quelconque des revendications 1-3, dans lequel le calcul a posteriori comprend l'utilisation d'une régression linéaire multiple, dans lequel une variable dépendante de la régression linéaire multiple est la déformation déterminée et les variables explicatives de la régression linéaire multiple sont les composantes du tenseur de contrainte ou les facteurs de charge.

5. Procédé selon l'une quelconque des revendications 1-4, dans lequel les dispositifs de mesure de déformation (15, 25 ; 15A-15C) sont des extensomètres de forage.

6. Procédé selon l'une quelconque des revendications 1-5, comprenant la réception de données d'entrée relatives aux caractéristiques de l'excavation, et l'utilisation des données d'entrée dans l'estimation.

7. Procédé selon l'une quelconque des revendications 1-6, comprenant la détermination d'un déplacement dans une direction et le calcul d'une déformation en fonction du déplacement déterminé.

8. Système d'estimation en temps réel du risque géotechnique dans une excavation, dans lequel le système comprend
au moins six dispositifs de mesure de déformation (15A-15C ; 15, 25) situés dans et autour d'une excavation, agencés pour déterminer des données de déformation selon différentes directions non parallèles les unes par rapport aux autres, ou au moins six dispositifs de mesure de déformation (15, 25 ; 15A-15C) formant deux ensembles (15, 25) de trois dispositifs de mesure (15A-15C) agencés dans des directions opposées par rapport à une direction longitudinale (5) de l'excavation (100) pour déterminer des données de déformation, les données de déformation comportant des données relatives à une pluralité de composantes de déformation ayant des directions différentes,
un système informatique (1000) connecté à au moins six dispositifs de mesure de déformation (15 ; 25) et configuré pour :
- recevoir (410), à partir des au moins six dispositifs de mesure de déformation installés dans une excavation, des données de déformation, y compris des données relatives à une pluralité de composantes de déformation ayant des directions différentes, sur un système informatique au cours des phases d'excavation ultérieures,
- accumuler les données de déformation dans le système informatique au fur et à mesure des étapes d'excavation ultérieures, et
- estimer (420) le risque géotechnique en exécutant un modèle statistique probabiliste dans le système informatique (1000), y compris le calcul a posteriori d'une variation du tenseur de contraintes en fonction des données de déformation reçues et en recourant à la superposition des composantes de déformation incluses dans les données de déformation déterminées, dans lequel les composantes de déformation sont déterminées en fonction de charges unitaires modélisées numériquement et des facteurs de charge correspondants, dans lequel la distribution relative aux données de déformation reçues est utilisée dans le modèle statistique probabiliste comme donnée d'entrée pour l'estimation du risque géotechnique, et
- adapter le modèle en fonction des données de déformation cumulées.

9. Système selon la revendication 8, dans lequel le système informatique (1000) est configuré pour surveiller le risque estimé et pour le comparer à un seuil de risque.

10. Produit programme informatique destiné à l'estimation en temps réel du risque lié à une excavation, dans lequel le produit comprend des instructions de programme qui, lorsqu'elles sont exécutées par un système informatique (1000), amènent le système à mettre en œuvre le procédé selon l'une quelconque des revendications précédentes 1-7.
